# EUROPÄISCHE PATENTSCHRIFT

(11) **EP 1 078 580 B1**
(45) Veröffentlichungstag und Bekanntmachung des Hinweises auf die Patenterteilung: **22.06.2005**
(21) Anmeldenummer: 00117497.8
(22) Anmeldetag: 12.08.2000
(51) Int. Cl.: A23N 5/00

(54) **Verfahren und Vorrichtung zum Schälen von Ölsaatsamen, insbesondere Sonnenblumensamen**
Process and device for shelling oil seeds, particularly sunflower seeds
Méthode et dispositif pour décortiquer des graines oléagineuses, notamment des graines de tournesol

(30) Priorität: 27.08.1999 EP 99116941
(43) Veröffentlichungstag der Anmeldung: 28.02.2001
(73) Patentinhaber: T + T Oleochemie GmbH, 63755 Alzenau (DE)
(72) Erfinder: von Rotenhan, Friedrich-Wilhelm, Freiherr, 97500 Ebelsbach (DE)
(74) Vertreter: Jung HML Patentanwälte

(56) Entgegenhaltungen:
- EP-A- 0 227 555
- DE-A- 2 916 729
- DE-A- 3 219 421
- DE-A- 3 415 719
- DE-A- 3 544 387
- GB-A- 1 203 284
- US-A- 4 231 529

## Beschreibung

Die Erfindung betrifft ein Verfahren und eine Vorrichtung zum Schälen von Ölsaatsamen, insbesondere Sonnenblumensamen. Das bedeutet eine Trennung der Schale (Perikarp) vom Kern (Embryo) der Körner (im Fall der Sonnenblumen der Achänen).

Ölsaaten von Ölpflanzen wie Sonnenblumen, Euphorbia Lathyris und Koriander zeichnen sich in der Regel dadurch aus, daß ihr Kern durch eine Samenhaut zusammengehalten wird, welche wiederum durch eine poröse, Wasser aufnehmende Schale (Perikarp) geschützt ist. Werden die Schalen vor der Ölgewinnung nicht entfernt, so saugen sie erhebliche Ölmengen von mindestens 7% ihres Gewichtes ein, so daß die Ölausbeute beim Pressen verringert ist. Das in die Schalen eingesaugte Öl kann nachträglich nur durch Extraktion mittels Lösemitteln gewonnen werden.

Es sind seit geraumer Zeit die unterschiedlichsten Verfahren und Vorrichtungen eingesetzt worden, um z.B. Sonnenblumensamen oder andere Ölfrüchte wie Sojabohnen zu schälen. Eine häufig angewandte Methode besteht darin, die einzelnen Samen stark zu beschleunigen und durch Aufprall zu schälen, wobei die Samen mit hoher Geschwindigkeit gegen einen Festgegenstand prallen, so daß ihre Schale durch die Abbremskraft beim Aufprall gesprengt wird. So werden rotierende Tellerscheiben aus Metall oder Hartkunststoff eingesetzt, die die Körner gegen eine Prallplatte schleudern, an der sie entsprechend ihrer eigenen Härte und der einwirkenden mechanischen Kräfte zerbersten. Der entstandene Kleinbruch aus den Kernen die Schalenbruchstücke werden durch Exhauster abgesaugt oder mit Schüttelsieben abgesiebt. Ferner sind modifizierte Vorrichtungen zum Schälen von Sonnenblumensamen oder Sojabohnen vorgeschlagen worden, die auch die Samen bzw. Körner oder Bohnen möglichst einzeln beschleunigen und durch Aufprall schälen (z.B. DE 29 16 729 A1). In den altbekannten Schlagleistenschälem werden ebenfalls Schlagwirkung und Aufprall zum Schälen genutzt. Als alternative Vorrichtungen sind Gummiwalzenschäler und Vorrichtungen mit zwei rotierenden Gummiplatten eingesetzt worden; zwischen denen die Samen unter leichtem Druck gerollt werden, um die Schalen abzulösen. Hierbei ist eine vorausgehende besonders sorgfältige Größenchargierung der Samen erforderlich.

Bei sämtlichen der obigen Methoden und Vorrichtungen wird häufig der Kern verletzt und zwar nicht nur durch die mechanische Beanspruchung durch Aufprall usw., sondern speziell auch dadurch, daß das Samenhäutchen, welches den Kern schützt, durch den Schälvorgang zerstört wird. Dies führt dazu, daß der Kern bereits im Schälvorgang Öl verliert und zudem in nachteiliger Weise in direkten Kontakt mit Luftsauerstoff und Feuchte gerät.

Dies gilt auch für die in der GB-A-1203284 beschriebene Vorrichtung, wenn man sie auf Ölsaatsamen wie Sonnenblumensamen anwenden würde. Die GB-A-1203284 beschreibt die Schälung von Kaffeebohnen in einer Trommel, in welche die Bohnen mit Hilfe einer Schnecke hinein gefördert werden. Es wird ein rotierendes Paddel benutzt, welche mehrere Längsstäbe umfasst, die sich in Richtung der Behandlungstrommel erstrecken. In radialer Richtung sind diese Stäbe einstellbar, so daß sie mit ebenfalls radial verstellbaren stationären, in Längsrichtung der Trommel verlaufenden und den Schälraum in radialer Richtung eingrenzenden Schälstangen zusammen wirken können. Die Kaffeebohnen werden durch die mechanische Einwirkung der rotierenden Stäbe und feststehenden Stangen auf die Bohnen geschält. Die zwischen Paddeln und Schälstangen geschälten Kerne und die abgetrennten Schalen fallen durch die Schälstangenzwischenräume und werden von dort aus zu weiterverarbeitenden Einheiten geleitet.

Bei Sonnenblumensamen hat man zur Gewinnung der geschälten Kerne für die Lebensmitelindustrie vor dem Schälvorgang statt eines üblicherweise angewandten einfachen Röstvorgangs der Samen eine hydrothermische Behandlung in Wasserdampf vorgenommen, um beim nachfolgenden scharfen Trocknen der oberflächlich angefeuchteten Schalen die mechanische Bindung zwischen Fruchtfleisch bzw. Kern und Schalen aufzubrechen und auch die Samenhaut zu lockern und möglichst gleichzeitig vom Kern zu trennen (DE 32 19 421 A1). Auch Sojabohnen hat man vor dem Schälen einer Erwärmung ausgesetzt, um neben einer Lösung der Schalen von den Kernen durch Kontakt mit heißen Flächen und nachfolgende Beaufschlagung mit heißem Gasstrom das Antitrypsin im Kern zu zerstören (DE 35 44 387 A1).

In den genannten Schriften sind auch die üblichen Maßnahmen zur Abscheidung der in der Schälvorrichtung abgeschlagenen Schalenstücke mittels Sichteranlagen oder Korona-Freifallabscheidern aufgeführt. Auch Kombinationen mit Elektroseparatoren sind zur Schalenabscheidung eingesetzt worden, um die geschälten Kerne von den Schalen zu trennen.

Der Erfindung liegt die Aufgabe zugrunde, ein Verfahren und eine Vorrichtung anzugeben, die eine Schälung der Ölsaatsamen, insbesondere in Form von Sonnenblumensamen, bei möglichst verbesserter Schonung des Kerns gestatten.

Diese Aufgabe wird durch den Gegenstand der unabhängigen Ansprüche gelöst. Bevorzugte Weiterbildungen sind in den Unteransprüchen definiert.

Beim erfindungsgemässen Verfahren bzw. in der erfindungsgemässen Vorrichtung zum Schälen von Ölsaatsamen, insbesondere Sonnenblumensamen, werden vorzugsweise getrocknete Ölsaatsamen beim Schälvorgang durch Rühren und unter Druckaufbau innerhalb einer räumlich eingegrenzten Schüttgutmenge aus diesen Ölsaatsamen gegeneinander und gegen die in der Schüttgutmenge gehaltenen, abgelösten Schalenteile gedrückt und gerieben, wobei die Schüttgutmenge in einer feststehenden Trommel gehalten wird, deren Innenwand frei von Bestückungen mit festen Schlagstiften, Drahtmatten und dergleichen anderen schlagenden oder reibenden Vorrichtungen ist.

Das erfindungsgemäße Verfahren und die Vorrichtung der Erfindung sind kostengünstig realisierbar, obgleich sie eine erfolgreiche Schälung sogar von High-Oleic-Sonnenblumensamen gestatten. Diese stark ölhaltigen Samen konnten bislang mit den konventionellen Verfahren und Vorrichtungen nur begleitet von einem nachteiligen Ölaustritt geschält werden. Gibt man sie ungeschält in eine Ölmühle, so ergeben sich zusätzlich zum hohen Ölverlust aufgrund der Bindung des Öls in den Schalen eine Reihe dem Fachmann bekannter Nachteile. Daher bedeutet die Erfindung speziell für derartige sehr ölhaltige Ölsaatsamen einen erheblichen technischen Fortschritt nicht nur im Hinblick auf die deutlich gesteigerte Ölausbeute, sondern auch, weil technische Probleme in der nachgeschalteten Ölgewinnungsanlange bei den geschälten Samen nicht mehr auftreten.

Beim erfindungsgemäßen Schälvorgang wird davon abgegangen, die einzelnen Samen gegen Platten oder Wände prallen zu lassen oder zwischen Scheiben oder Gummiwalzen zu rollen. Statt dessen werden die getrockneten Ölsaatsamen in einer Schüttgutmenge durch Rühren gegeneinander gerieben, und zwar unter gleichzeitigem Druckaufbau in der Schüttgutmenge, durch den das Schüttgut verdichtet wird. Durch das Rühren des Schüttgutes unter gleichzeitigem leichten Druckaufbau entsteht ein Druck auf die Samenschale. Durch das gleichzeitige Reiben des verdichteten Gutes in sich zerbröselt die Samenschale und der Kern bleibt annähemd erhalten und fällt aus. Dabei erlangt das gerührte Gut in seiner Substanz einen hohen Widerstand, wodurch die durch das Rühren auf das Gut ausgeübten Kräfte erhöht werden.

Auf diese Weise gelingt es, Ölsaatsamen wie Korianderkerne und getrocknete Sonnenblumenkeme ohne Zerstörung der Samenhäute und des Kerns und ohne nennenswerten Ölaustritt zu schälen und die abgeschälten Samenschalen anschließend problemlos z.B. mit einem einfachen Windsichter abzuscheiden. Durch den Wegfall der aus Zellulose gebildeten Schalen wird die Ölausbeute in einer nachgeschalteten Ölpresse auf einen sehr hohen Wert gesteigert. Die starke Ölaufnahme der übertrockenen Schalen bei Standardölgewinnungsverfahren ist damit vermieden. Die Ölausbeute erfindungsgemäß geschälter High-Oleic-Sonnenblumensamen kann auf den theoretisch höchstmöglichen Wert gesteigert werden.

Der Druckaufbau wird vorzugsweise durch einen im Vergleich zum Einlauf reduzierten Mengenablauf erzielt und so begrenzt, daß weder die direkte mechanische gegenseitige Druckbeaufschlagung der Ölsaatsamen und Samenschalen in der Schüttgutmenge noch eine beim Schälvorgang durch die Rührbewegung und den Druckaufbau hervorgerufene Erwärmung zu einem Ölaustritt aus den Ölsaatsamen führen. Da eine direkte Messung des Druckaufbaus innerhalb der Schüttgutmenge sich schwieriger gestaltet als eine Temperaturmessung, wird letztere bevorzugt. Vorzugsweise wird am Gutauslaß die Temperatur des geschälten Guts gemessen. Das Gut sollte möglichst noch handwarm sein (etwa 33 °C). Temperaturen, die an 60 °C heranreichen, müssen in der Regel vermieden werden. Bei High-Öleic-Sonnenblumensamen sollte eine Guttemperatur von 40 °C nicht überschritten werden. Im übrigen kann der Fachmann bei einer Steuerung der Mengenablaufreduzierung auch ohne die Temperaturermittelung mit mehreren einfachen Versuchen die Obergrenze für den Drosselungsgrad ermitteln, indem er feststellt, bei welchem Grad er bei den jeweils zu schälenden Ölsaatsamen einen beginnenden Ölaustritt beobachtet. Den Grad kann der Fachmann durch Feststellen eines Klebrigwerdens der Schalen und Spreu ermitteln. In der weiter unten beschriebenen Vorrichtung wurde bei High-Oleic-Sonnenblumensamen ein günstiges Verhältnis von Einlaufvolumen zu Auslaufvolumen von etwa 100:90 ermittelt.

Vorzugsweise wird eine rührende Förderbewegung der Schüttgutmenge bewirkt. Nach dem weiter unten beschriebenen Ausführungsbeispiel wird hierzu die in einer schraubenförmigen Rührvorrichtung erzeugte Bewegung des Schüttgutes zum Gutauslauf der Schälvorrichtung genutzt. Die bei der Bewegung des Gutes abgespaltenen Schalenteile bilden einen wirksamen Schutz des Kernmaterials gegen Zerreibung bei schwankendem Druckaufbau im Schälvorgang. Dieser natürliche Schutz durch die Schalenteile nimmt zum Bereich der Schüttgutabfuhr hin mit der zunehmenden Menge an entschälten und somit nicht mehr geschützten Samen zu. Um diesen Effekt zu steigern, werden bevorzugt bereits abgeschiedene Schalenteile der Schüttgutmenge zusätzlich zugesetzt. Hierdurch wird das Schälergebnis weiter deutlich verbessert.

Bei zunehmender Schalenhärte der Ölsaatsamen erfolgt bevorzugt eine zusätzliche Verwirbelung der Schüttgutmenge dadurch, daß Teile des Schüttgutes einer Rückwärtsbewegung im Fließgut unterzogen werden. Diese Zusatzmaßnahme ist bei einer Reihe von Ölsaaten und speziell High-Oleic-Sonnenblumensamen nicht erforderlich. Diese Saaten mit normal harten Schalen konnten nahezu vollständig und mit vernachlässigbarem Ölverlust ohne zusätzliche Verwirbelung geschält werden. Es gibt jedoch auch außerordentlich hartschalige High-Oleic-Sonnenblumensamen, bei denen z.B. die Schalen glatt sind und nicht die üblichen Verriefungen aufweisen sowie die beiden Schalenhälften außerordentlich fest aufeinander sitzen. Bei derartigen praktisch kaum mit konventionellen Mitteln zu schälenden Sorten brachte die zusätzliche Verwirbelung deutliche Verbesserungen bei der erfindungsgemäßen Schälung.

Auch eine größenmäßige Chargierung der Samen vor ihrer Schälung trägt zur Verbesserung des Schälergebnisses bei. So hat sich gezeigt, daß kleinere Samen den Zwischenraum zwischen größeren Körnern ausfüllen und sich so als Druckreduzierer verhalten und die Druckweitergabe unter den Samen beeinträchtigen. Dem kann man auch entgegenwirken, indem man eine konische Trommel für die Schüttgutmasse mit zum Schüttgutauslaß abnehmendem Querschnitt verwendet. Durch die (in der Herstellung allerdings kostenaufwendige) konische Ausformung verbessert sich der Druckaufbau in Flußrichtung des Gutes.

Für die Chargierung empfiehlt sich eine Samensortierung in Größenklassen von 1,5 mm Korngröße an aufwärts (in kleineren Körnern ist kaum Öl enthalten) und zwar von mm zu mm. Damit können ungleiche Drücke infolge ungleicher Samenauswirkungen vermieden werden.

Nach dem erfindungsgemäßen Verfahren werden die Ölsaatsamen und speziell die Sonnenblumensamen vor dem Schälvorgang getrocknet. Samen, deren Kern ohnehin nur eine sehr lockere oder keine Bindung zur Samenschale hat, können gegebenenfalls auch ohne Trocknung oder nur nach einer oberflächlichen Trocknung ihrer Schale erfindungsgemäß geschält werden. Das Trocknen vor dem Schälvorgang ist prinzipiell bekannt, wie weiter oben erläutert. Erfindungsgemäß wird jedoch bevorzugt so getrocknet, daß der Kern der Ölsaatsamen unter Wasserabgabe so schrumpft, daß Kern und Schale vollständig getrennt werden und nicht mehr aneinander haften. Speziell bei der Sonnenblume wird bevorzugt so getrocknet, daß ein Zwischenraum zwischen dem Kern und der Schale entsteht. Durch die Trocknung des Kerns wird der Kern härter und bruchsicherer. Dieser Zwischenraum ist vorteilhafterweise so groß, daß der gehärtete Kern beim Zerreiben der Schale frei herausfallen kann. Dies kann man beispielsweise durch Zerreiben zwischen den Fingern testen. Vorzugsweise trocknet man soweit, daß die Restfeuchte des Kerns unter 10% liegt. Bei Sonnenblumenkernen erwies es sich als besonders vorteilhaft, die Restfeuchte auf 4% oder weniger zu senken. Es hat sich gezeigt, daß man bei schonender Trocknung die gewünschte Trennung der Schale vom Kern erzielen kann, ohne die den Kern umgebende Samenhaut zu beeinträchtigen und die durch die Trocknung spröde werdende Schale soweit zu verspröden, daß sie brüchig wird.

Die erfindungsgemäße Trocknung bewirkt demnach im Gegensatz zu üblichen Trocknungsmaßnahmen an Ölsaaten keine oberflächliche Trocknung der Samen mit Zerstörung der Schale und einer Trocknung lediglich der äußeren Kemschichten, sondern eine Trocknung des gesamten Kerns einschließlich seiner inneren Schichten verbunden mit Schrumpfung und Härtung des auf diese Weise verstärkt getrockneten Kerns. So kommt es bei den gängigen Trocknern mit schnellem Durchsatz und hohen Trocknungstemperaturen dazu, daß die Außenschicht des Kerns verbackt, da sie schneller Wasserdampf abgibt als die darunter liegenden Schichten des Kerns. Der Wasserdampfaustritt aus den tieferliegenden Schichten sprengt dann die verbackte Kernaußenschicht.

Eine entsprechend schonende Trocknung erzielt man z.B. in einem Durchlufttrockner mit warmer Luft, deren Temperatur nicht in die Nähe des Wassersiedepunktes kommen sollte und vorzugsweise zumindest 10 °C unter dem Wassersiedepunkt eingestellt wird. Im Bereich unter 90 °C, vorzugsweise um 80 °C wird ein sehr guter Wasserentzug aus dem Kern erzielt. Senkt man die Temperatur deutlich ab, so kann zwar auch eine schonende Trocknung bewerkstelligt werden, jedoch nimmt die erforderliche Einwirkungszeit stark zu.

Das erfindungsgemäße Verfahren eignet sich prinzipiell für eine Vielzahl von mit Schalen versehenen Hartkörnern, bringt jedoch speziell bei Sonnenblumensamen und den High-Oleic-Sonnenblumensamen gegenüber den bisherigen, zum Teil aufwendige Vorrichtungen erfordernden Schälverfahren einen erheblichen Fortschritt. Aus diesem Grund wird die Erfindung auch anhand von Sonnenblumensamen erläutert.

Das erfindungsgemäße Verfahren sowie auch die im folgenden erläuterte Vorrichtung sind außer für Ölsaatsamen auch für andere mit Schalen versehene Früchte geeignet. So konnten Markerbsen, sogenannte Amyloseerbsen, mit sehr gutem Erfolg erfindungsgemäß geschält werden.

In der erfindungsgemäßen Vorrichtung besteht der Behälter zur Aufnahme der Schüttgutmenge und der Rührvorrichtung vorzugsweise aus einer feststehenden Trommel mit innen laufender, schraubenförmig bestückter Welle, welche das Gut in Längsachse der Trommel zu einem Gutauslauf transportiert. Bevorzugt wird ein waagerecht gelagerter Behälter mit einer in der Schüttgutmenge laufenden, an den Kopfseiten gelagerten Rührvorrichtung. In der Trommel wird ein Druckaufbau im Schüttgutvolumen dadurch erzeugt, daß das Schüttgutabfuhrvolumen auf einen geringeren Wert eingestellt wird als das Schüttgutzufuhrvolumen am Schüttguteinlaß, wie bereits oben erwähnt wurde. Auf diese Weise wird eine Verdichtung des Schüttgutes verbunden mit der gewünschten Reibung der leicht aneinander gedrückten Samen und Samenschalenteile erzielt.

Prinzipiell ist es jedoch auch möglich, einen vertikal gelagerten Rührbehälter zu verwenden und alternativ oder zusätzlich zum Druckaufbau durch Gutauslaßdrosselung einen statischen, durch die senkrechte Schüttgutsäule im Behälter hervorgerufenen Druck zu nutzen. Es ist ferner auch denkbar, das Schüttgut chargenweise zu rühren und ohne kontinuierlichen Gutauslauf zu arbeiten.

Als Rührstäbe an der Welle der Rührvorrichtung werden bevorzugt kantige Stäbe eingesetzt, die so auf der Welle angebracht sind, daß sie mit ihrer Schlagkante in die Richtung der rotierenden Rührstabbewegung weisen, so daß die Samen in der Schüttgutmenge nicht von einer senkrecht zur Umlaufrichtung planen Fläche, sondern von dieser Kante getroffen werden. Zu beiden Seiten der Kante überstreichen die Samen die angrenzenden, zurückweichenden und schräg zur Umlaufrichtung der Stäbe liegenden Stabflächen, ohne an diesen gequetscht zu werden. Mit dieser Anordnung konnten zahlreiche Sorten von High-Oleic-Sonnenblumensamen äußerst erfolgreich und schonend geschält werden. Bei zunehmender Härte der Schalen, speziell von Sonnenblumensamen, wird die Schlagkante bevorzugt verdreht, wobei ein von der Längsachse der Stäbe zur Schlagkante der Stäbe weisender Zeiger nicht mehr senkrecht zur Längsachse der Welle steht, sondern unter einem Winkel kleiner 90° hierzu verläuft. Auch hierbei weist die Schlagkante in der Regel noch in Umlaufrichtung der Stäbe und die Samen werden nicht ausschließlich von einer planen Fläche getroffen.

Die Stäbe sind bevorzugt quadratischen Querschnitts und um ihre Längsachse winkelmäßig gleich eingestellt. Bei den vorzugsweise angewandten sehr hohen Drehzahlen konnte mit derartigen Stäben eine stabile Rotation gewährleistet werden. Es sind jedoch prinzipiell auch Dreikantstäbe möglich, von denen eine Kante in Umlaufrichtung ausgerichtet wird.

Die Stäbe laufen bevorzugt mit nur geringem Spiel von 2 mm oder weniger zur Innenwand der Trommel. Das Spiel sollte zweckmäßigerweise den halben Komdurchmesser nicht überschreiten. Die Trommelinnenwand ist vorzugsweise glatt und im Gegensatz zu anderen Saatbehandlungsmaschinen wie Entgrannern für Getreide weder mit festen Schlagstiften noch Drahtmatten und dergleichen anderen schlagenden oder reibenden Vorrichtungen bestückt. Durch das geringe Spiel und die glatte Trommelinnenwand werden eine Ölabgabe und ein Festfahren der in der Schüttgutmasse rotierenden Teile vermieden.

Erfindungsgemäß wird in der obigen bevorzugten Vorrichtung mit hohen Drehzahlen der Welle und daraus resultierenden hohen Geschwindigkeiten am äußeren Ende der Rührvorrichtung gearbeitet. Bei einer ersten Versuchsanlage wurde mit einer Drehzahl von 1000 U/min eine Außengeschwindigkeit der Rührstabspitzen von über 15 m/s erreicht. Auch mit geringeren Drehzahlen ist ein Schälen möglich, jedoch bei geringerer Mengenleistung der Maschine und zu Lasten des erforderlichen Zeitaufwandes. In einer späteren Vorrichtung wurde mit Drehzahlen von z.B. 1500 U/min bis 2500 U/min, vorzugsweise etwa 2000 U/min gearbeitet und an den Rührstabspitzen dieser Vorrichtung noch wesentlich höhere Rührgeschwindigkeiten erzielt. Abgesehen davon, daß die Schälvorrichtung bei hohen Drehzahlen eine entsprechend aufwendigere Konstruktion erfordert, gilt für den Rührvorgang genau wie für den Druckaufbau, daß die insgesamt hervorgerufene Erwärmung des Schüttgutes zu begrenzen ist.

Im folgenden wird die Erfindung anhand der Zeichnungen näher erläutert. Es zeigen
Figur 1 eine schematische Darstellung eines bevorzugten Ausführungsbeispiels der erfindungsgemäßen Vorrichtung zum Schälen,
Figur 2 ein Fließbild mit der in einer Schälanlage für Sonnenblumensamen angeordneten Vorrichtung aus Figur 1 und
Figur 3 eine schematische Darstellung zur Erläuterung einer winkelmäßigen Verstellung der Schlagstäbe der Figur 1 gemäß einer Weiterbildung der Erfindung.

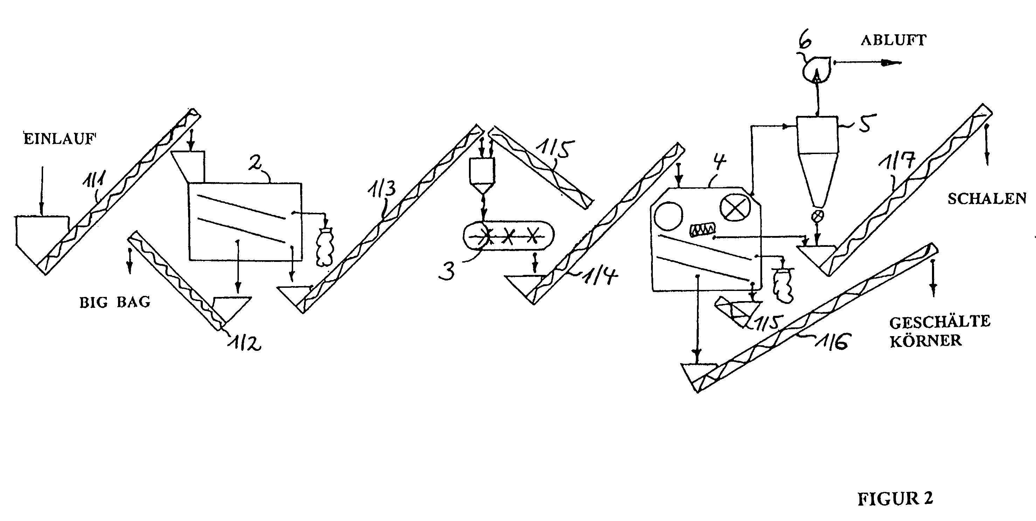

Nach dem schematischen Fließbild der Figur 2 werden die Sonnenblumensamen auf einen Rohrschneckenförderer 1/1 mit Einschüttgosse und fahrbarer Stütze sowie Füllstandswächter gegeben. Vom Rohrschneckenförderer 1/1 gelangen die Samen in eine Sortiermaschine 2 mit zwei Sieben sowie drei Abgängen. Noch im Saatgut befindliches Grobzeug gelangt über den oberen Abgang in einen Sack. Die kleinen Körner werden am unteren Abgang über einen weiteren Rohrschneckenförderer 1/2 mit Einfülltrichter einem sogenannten Big Bag oder einem Silo zugeführt. Die herausgesiebten größeren Körner werden über einen folgenden Rohrschneckenförderer 1/3 mit Einfülltrichter in den Pufferbehälter einer Schälvorrichtung 3 gegeben, die weiter unten detailliert erläutert ist. Unter deren Auslaß ist der Einfülltrichter eines weiteren Rohrschneckenförderers 1/4 angeordnet, der zu einer weiteren Sortiermaschine 4 mit Speiseeinrichtung, Schalenabsaugung, zwei Sieben und fünf Abgängen führt. Die heraussortierten geschälten Samen bzw. blanken Körner werden über den Einfülltrichter eines weitereren Rohrschneckenförderers 1/6 abgeführt. Eine noch ungeschälte Fraktion wird aus einem zweiten Ausgang der Sortiermaschine 4 entnommen und über den Einfülltrichter eines Rohrschneckenförderers 1/5 dem Pufferbehälter der Schälvorrichtung 3 zugeführt. Einem Fliehkraftabscheider 5 mit Radialventilator 6 werden über einen dritten Ausgang Kornbruchstücke mit Schalenresten zugeführt. Die abgeschiedenen Schalen fallen in den Einfülltrichter eines Rohrschneckenförderers 1/7. In diesen Einfülltrichter werden auch die Schalen aus der Schalenabsaugung der Sortiermaschine 4 gegeben.

An der Sortiermaschinen 4 ist ebenfalls auch ein Ausgang für abgetrennten Abfall vorgesehen, der einem schematisch dargestellten Sack zugeführt wird.

Die obige Schälanlage ist für einen Durchsatz an Sonnenblumensamen von 2 t/h ausgelegt.

Die Samen werden in getrocknetem Zustand, wie weiter oben erläutert, in die Anlage gegeben. Die Trocknung wurde in einem Durchlauftrockner im heißen Luftstrom von ca. 80 °C und einem Trocknerdurchsatz von etwa 500 kg pro 1,5 h vorgenommen. Benutzt wurde ein Tornado-Trockner der Firma Horstkötter & Co. KG, Beckum, mit thermostatisierter Warmluftzuleitung. Der angegebene Trocknerdurchsatz war allerdings geringer als der vom Hersteller vorgesehene Durchsatz.

Für eine schonende Trocknung sind prinzipiell auch andere Trocknerarten und Trocknungsverfahren wie eine Vakuumtrocknung einsetzbar. Wichtig ist, daß es gelingt, tatsächlich den Kern in seiner Gesamtheit zu trocknen, ohne dabei dessen äußere Schichten zu zerstören.

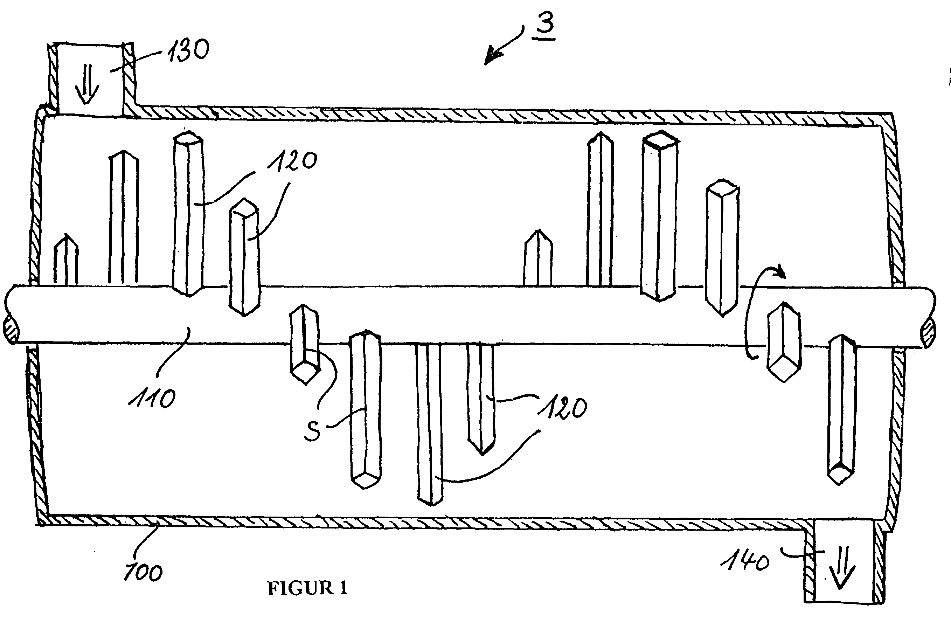

Ein wesentlicher und gegenüber dem Stand der Technik neuartiger Bestandteil der Anlage aus Figur 2 besteht in der Schälvorrichtung, von der in Figur 1 der prinzipielle Aufbau eines bevorzugten Ausführungsbeispiels gezeigt ist. In einer etwa 1,00 m langen waagerecht stehenden und statischen Stahltrommel 100 ist mittig eine Welle 110 mit rundem Querschnitt in nicht dargestellter Weise drehbar gelagert und kann auf Drehzahlen von über 2000 U/min gebracht werden. In diese Welle 110 sind Rührstäbe 120 in Form von Vierkantstählen mit quadratischem Querschnitt gekontert eingeschraubt. Sie sind verstellbar und können bei Abnutzung der in Drehrichtung weisenden Schlagkante S auf eine andere, noch nicht abgenutzte Schlagkante verstellt werden. Im Ausführungsbeispiel betrug der Zwischenraum zwischen den Rührstäben 120 bei einer Querschnittsfläche der Stäbe von 2,25 cm² bei einer Ausführung etwa drei bis vier und bei einer späteren etwa fünf Zentimeter. Das Spiel zwischen Schlagstäben und Trommelinnenwand betrug maximal 2 mm. Wie schematisch angezeigt, folgen die Stabachsen einer Schraubenlinie. In der schematischen Darstellung der Schraubenlinie der Figur 1 beträgt der Winkelversatz zwischen den Stäben 45°. Es wurden eine Reihe von Winkelversätzen getestet. In einer bevorzugten Ausführung beträgt der Winkelversatz 90°, so daß jeder Schraubengang durch vier Stäbe realisiert ist. Bei dieser Ausführung waren fünf ganze Schraubengänge auf der Welle vorgesehen. Um Unwuchten zu vermeiden, empfiehlt sich die Anbringung von ganzen Schraubengängen und die Vermeidung von Unsymmetrien durch unvollständige, beispielsweise halbe Schraubengänge.

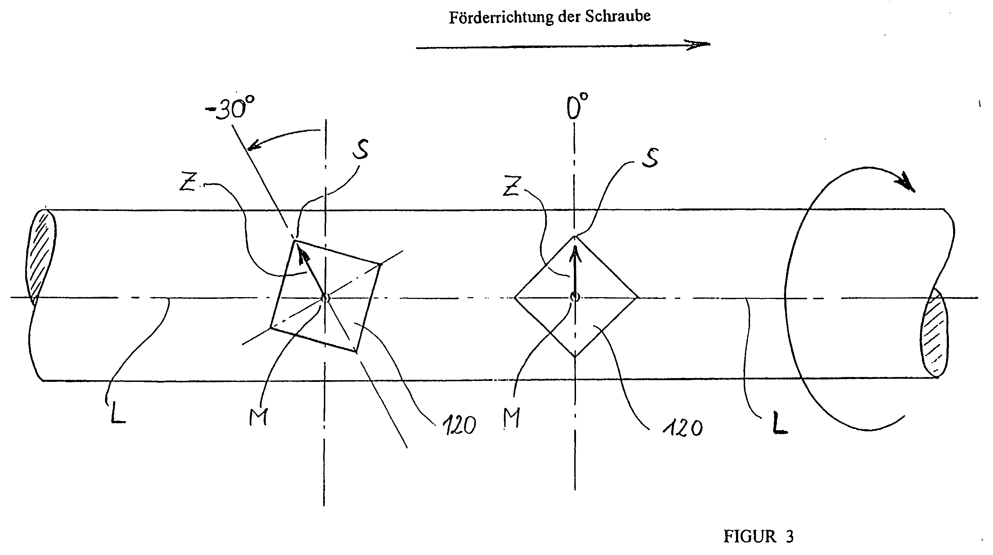

In Figur 3 ist die speziell bei härteren Sonnenblumensamen bevorzugte Winkelverstellung der Rührstäbe 120 auf der Welle 110 schematisch verdeutlicht, wobei von oben auf die Welle und die Stäbe geblickt wird. Beim in der Zeichnung rechten Rührstab ohne Winkelverstellung liegt ein von der Längsachse M der Stäbe zur Schlagkante S weisender Zeiger Z senkrecht zur Längsachse L der Welle 110 und in einer Radialebene der Welle. Bei dem linken Rührstab ist die in Drehrichtung weisende Spitze der Schlagkante S um einen Winkel -30° gegenüber der Radialebene entgegen der Förderrichtung der Schraube versetzt. Der Zeiger Z schließt mit der Wellenlängsachse L einen Winkel von 60° ein. In der von den Stäben gebildeten unterbrochenen Schraube der Figur 1 kommt es zwischen den Stäben mit einer Winkelstellung wie beim Stab auf der rechten Seite der Figur 3 bereits zu einer gewissen Rückwärtsbewegung und Verwirbelung der Saat zwischen den Stäben. Diese werden durch die winkelmäßige Verstellung der Stäbe wie beim Stab auf der linken Seite der Figur 3 gesteigert. Durch diese Verstellung wird der abfließende Saatgutstrom quasi aufgelöst und unterliegt über eine kurze Strecke einer Gegenbewegung zur Förderrichtung. Eine winkelmäßige Verstellung in Förderrichtung ist prinzipiell auch möglich, jedoch z.B. infolge beobachteter verstärkter Saatguterwärmung weniger bevorzugt.

Die optimale Winkeleinstellung der Schlagkante der Stäbe wird einerseits von der Schalenhärte und damit Schälbarkeit der Saat bestimmt und hängt andererseits auch von der Steigung der Schraube und vom Winkelversatz der Stäbe auf der Welle (z.B. 90° bei vier Stäben, 45°bei acht Stäben und 60° bei sechs Stäben) ab. Um den optimalen Wert zu finden, sind die Stäbe vorzugsweise um ihre Längsachse winkelmäßig einstellbar, so daß mit einer vorgegebenen Steigung und einem vorgegebenen Winkelversatz (Anzahl der Stäbe pro Schraubengang) der optimale Wert für das jeweilige Saatgut durch wenige Versuche gefunden werden kann. Hierzu wird lediglich das Ergebnis der Schälung beobachtet, sowie darauf geachtet, daß das Saatgut nicht zu sehr erwärmt wird. Die Kombination 90° Winkelversatz der Stäbe in der Schraube und -30° Verstellung der Schlagkante S erwies sich für härtere Sonnenblumensamen als vorteilhaft.

Es ist auch möglich, die Stäbe so anzuordnen, daß sich nebeneinander mehrere Schraubenlinien ergeben. Bei einer Doppelreihenausbildung sollten die Stäbe einer Reihe gegenüber denen der anderen Reihe auf Lücke versetzt angeordnet sein.

Den mit (nicht dargestelltem) Handrad mittels eines Schiebers (nicht dargestellt) einstellbaren Einlaß 130 zugeführten Samen werden Schalen zugegeben, mit denen die oben dargelegte positive Wirkung erzielt wurde. Ein Optimum an Schalenzugabe lag für die geschälten High-Oleic-Sonnenblumensamen bei etwa 3 Gew.%. Der Schalenanteil der Samen beträgt etwa 17 Gew.% und wurde durch die Zugabe auf etwa 20 Gew.% erhöht. Die Zugabemenge wird allerdings davon abhängen, wie groß die chargierten Körner sind, da mit steigender Korngröße mehr Leerraum zwischen den Körnern bzw. Samen und damit weniger berührende Druckstellen entstehen. Diesem Effekt wird durch Auffüllen mit Schalenmaterial begegnet.

Der Auslauf 140 ist wiederum mit einem von einem Handrad betätigten Schieber einstellbar. Der Auslaßquerschnitt wird in der gezeigten Vorrichtung für Sonnenblumensamen so eingestellt, daß Einlauf- zu Auslaufvolumen im Verhältnis 100 : 90 steht. Dieser Wert erwies sich bei einer Wellendrehzahl von 2100 U/min als günstig, um einen geeigneten Druckaufbau in der Schüttgutmasse innerhalb der Trommel 100 zu erzeugen.

Durch eine bevorzugt vorgesehene Synchronsteuerung von Ein- und Auslaßquerschnitt kann dafür gesorgt werden, daß z.B. bei variiertem Einlaßquerschnitt während des Schälvorgangs der Auslaufquerschnitt synchron so angepaßt wird, daß das gewünschte Volumenverhältnis beibehalten wird.

Vorzugsweise wird am Auslauf ein Thermometer eingebaut und die Temperatur des ausgetragenen Gutes zu überwacht. Wird ein zuvor abhängig vom Schälgut festgelegter, kritischer Temperaturwert (von beispielsweise 40 °C) überschritten, so wird ein vorgesehener Abschaltmechanismus angesteuert und die Schälvorrichtung abgeschaltet. Darüber hinaus bietet sich auch die Möglichkeit, über einen kontinuierliche Temperaturerfassung, eine Steuergröße für die Steuerung von Ein- und Auslaufquerschnitt zu gewinnen und die Schälvorrichtung geregelt zu betreiben.

## Patentansprüche

1. Verfahren zum Schälen von Ölsaatsamen, insbesondere Sonnenblumensamen, bei dem vorzugsweise getrocknete Ölsaatsamen beim Schälvorgang durch Rühren und unter Druckaufbau innerhalb einer räumlich eingegrenzten Schüttgutmenge aus diesen Ölsaatsamen gegeneinander und gegen die in der Schüttgutmenge gehaltenen, abgelösten Schalenteile gedrückt und gerieben werden, wobei die Schüttgutmenge in einer feststehenden Trommel gehalten wird, deren Innenwand frei von Bestückungen mit festen Schlagstiften, Drahtmatten und dergleichen anderen schlagenden oder reibenden Vorrichtungen ist.

2. Verfahren nach Anspruch 1,
**dadurch gekennzeichnet,**
**daß** zum Druckaufbau Ein- und oder Auslaßquerschnitte der Trommel eingestellt werden.

3. Verfahren nach Anspruch 1 oder 2,
**dadurch gekennzeichnet,**
**daß** der Schüttgutmenge zusätzlich bereits abgelöste Schalenteile aus einer nachgeschalteten Verfahrenstrennstufe zugesetzt werden.

4. Verfahren nach einem der vorhergehenden Ansprüche,
**dadurch gekennzeichnet,**
**daß** die Ölsaatsamen vor dem Schälvorgang soweit getrocknet werden, daß sich ihr durch Feuchtigkeitsabgabe geschrumpfter Kern von der Samenschale trennt und sich insbesondere im Fall von Sonnenblumensamen ein Zwischenraum zwischen dem Kern und der Samenschale bildet.

5. Verfahren nach einem der vorhergehenden Ansprüche,
**dadurch gekennzeichnet,**
**daß** der im Schüttgut aufgebaute Druck auf maximale Werte begrenzt wird, bei denen die auf die Ölsaatsamen wirkende Druckkraft und eine in der Schüttgutmenge hervorgerufene Temperaturerhöhung noch nicht zum Ölaustritt führen, und daß eine Drucküberwachung und - steuerung vorzugsweise über eine Messung der Temperatur von aus der Schüttgutmenge entnommenem geschälten Gut erfolgen.

6. Verfahren nach einem der vorhergehenden Ansprüche,
**dadurch gekennzeichnet,**
**daß** der Druckaufbau durch ein relativ zum Schüttgutzufuhrvolumen verringertes Schüttgutabfuhrvolumen und die Umdrehungszahl eines Rührvorrichtungsantriebs gesteuert wird, wobei bevorzugt hohe Drehzahlen angewandt werden, bei denen die maximalen Geschwindigkeiten an den Rührvorrichtungen mehr als 15 m/s betragen.

7. Verfahren nach einem der vorhergehenden Ansprüche,
**dadurch gekennzeichnet,**
**daß** die Rührbewegung als gleichzeitige Förderbewegung von der Stelle der Schüttgutzufuhr zur Stelle der Schüttgutabfuhr erfolgt und daß bei zunehmender Härte der Ölsaatsamen eine zusätzliche Verwirbelung der Schüttgutmenge **dadurch** vorgenommen wird, daß Teile des Schüttgutes einer Rückwärtsbewegung unterzogen werden.

8. Verfahren nach einem der vorhergehenden Ansprüche,
**dadurch gekennzeichnet,**
**daß** die Ölsaatsamen als nach Samengröße chargiertes Gut geschält werden, wobei die Ölsaatsamen bevorzugt nach Samengrößen von mm zu mm sortiert werden.

9. Verfahren nach einem der vorhergehenden Ansprüche,
**dadurch gekennzeichnet,**
**daß** die Ölsaatsamen so schonend getrocknet werden, daß die Restfeuchte ihres Kerns auf höchstens 10% Restfeuchte oder weniger, im Fall von Sonnenblumensamen bevorzugt auf etwa 4% Restfeuchte verringert wird, wobei die angewandte Trocknungstemperatur wenigstens etwa 10 °C unter der Wassersiedetemperatur liegt.

10. Vorrichtung zum Schälen von Ölsaatsamen, insbesondere Sonnenblumensamen, aufweisend einen Behälter in Form einer feststehenden Trommel (100), deren Innenwand frei von Bestückungen mit festen Schlagstiften, Drahtmatten und dergleichen anderen schlagenden oder reibenden Vorrichtungen ist und zur Aufnahme einer Schüttgutmenge aus Ölsaatsamen dient, und eine im Behälter angeordnete, in der Schüttgutmenge gehaltene Rührvorrichtung (110, 120) zur rührenden Bewegung und Reibung der Ölsaatsamen, unter Druckaufbau innerhalb der Schüttgutmenge, gegeneinander und gegen die in der Schüttgutmenge gehaltenen, abgelösten Schalenteile.

11. Vorrichtung nach Anspruch 10,
**dadurch gekennzeichnet,**
**daß** die unbestückte Innenseite der Trommel (100) eine glatte Oberfläche hat und die Rührvorrichtung eine sich in Längsrichtung der Trommelachse erstreckende Welle (110) umfaßt, an der kantige Rührstäbe (120), vorzugsweise um ihre Längsachse verdrehbar, fest angebracht sind.

12. Vorrichtung nach Anspruch 11,
**dadurch gekennzeichnet,**
**daß** die Rührstäbe (120) so angebracht sind, daß die Schlagkante (S) in Richtung der rotierenden Rührstabbewegung weist, wobei ein von der Stablängsachse (M) zur Schlagkante (S) weisender Zeiger (Z) senkrecht zur Längsachse der Welle (110) oder unter einem Winkel kleiner 90° hierzu verläuft.

13. Vorrichtung nach einem der Ansprüche 11 und 12,
**dadurch gekennzeichnet,**
**daß** die Rührstäbe (120) mit geringem Spiel von der Trommelachse bis an die Trommelinnenwand reichen und vorzugsweise einen rechteckigen Querschnitt haben.

14. Vorrichtung nach einem der Ansprüche 11 und 13,
**dadurch gekennzeichnet,**
**daß** die Rührstäbe (120) längs der Welle (110) beabstandet und auf der Welle winklig derart gegeneinander versetzt angeordnet sind, daß die Stabachsen einer Schraubenlinie folgen, wobei zur Vermeidung von Unwuchten vorzugsweise nur ganzzahlige Schraubengänge auf der Welle (110) vorgesehen sind.

15. Vorrichtung nach einem der Ansprüche 11 bis 14,
**dadurch gekennzeichnet,**
**daß** alle Rührstäbe (120) mit gleicher Verdrehung um ihre Längsachse angebracht sind.

16. Vorrichtung nach einem der Ansprüche 11 bis 15,
**dadurch gekennzeichnet,**
**daß** die Trommel steuerbare Ein- und/oder Auslaßquerschnitte, vorzugsweise mit einer Synchronsteuerung zwischen Trommelein- und -auslaß für das Schüttgut aufweist.

17. Vorrichtung nach einem der Ansprüche 11 bis 15,
**dadurch gekennzeichnet,**
**daß** die Trommel zum Auslaß hin konisch verjüngt ausgebildet ist.

18. Vorrichtung nach einem der Ansprüche 10 bis 17,
**dadurch gekennzeichnet,**
**daß** die Vorrichtung mit einer vorgeschalteten Trocknungseinrichtung kombiniert ist, in der die Ölsaatsamen vor dem Schälvorgang soweit trockenbar sind, daß sich ihr durch Feuchtigkeitsabgabe geschrumpfter Kern von der Samenschale trennt und sich insbesondere im Fall von Sonnenblumensamen ein Zwischenraum zwischen dem Kern und der Samenschale bildet.

## Claims

1. A method for dehulling oil-bearing seeds, in particular sunflower seeds, in which preferably dried oil-bearing seeds during the dehulling process, by agitating and by pressure build-up within a spatially confined bulk material quantity of these oil-bearing seeds, are pressed and rubbed against each other and against the separated hull fragments held in the bulk material, wherein the bulk material is held in a stationary drum the inner wall of which being free of installations with stationary beater pins, wire mats and other beating or rubbing means of such kind.

2. The method according to claim 1,
**characterised in that**
for pressure build-up, inlet and/or outlet cross sections of the drum are adjusted.

3. The method according to claim 1 or 2,
**characterised in that**
already separated hull fragments from a downstream process separation stage are additionally added to the bulk material.

4. The method according to one of the preceding claim,
**characterised in that**
prior to the dehulling process, the oil-bearing seeds are dried to an extent that their kernel, shrunk as a result of losing water, separates from the hull and that, in particular in the case of sunflower seeds, a space forms between the kernel and the hull.

5. The method according to one of the preceding claims,
**characterised in that**,
the pressure build-up in the bulk material is limited to maximum values at which the pressure acting on the oil-bearing seeds and a temperature increase caused in the bulk material produce do not yet lead to leakage of oil, and that pressure monitoring and control preferably take place via temperature measuring of dehulled material taken from the bulk material.

6. The method according to one of the preceding claims,
**characterised in that**
pressure build-up is controlled by a bulk material discharge volume reduced in relation to the bulk material inlet volume, and by the rotational speed of agitator drive means wherein preferably high rotational speeds are applied in which the maximum speeds at the agitating devices exceed 15 m/s.

7. The method according to one of the preceding claims,
**characterised in that**
the agitator movement takes place as a concurrent conveying movement from the position of bulk material inlet to the position of bulk material discharge and that, with increasing hardness of the hulls of the oil-bearing seeds, an additional turbulence of the bulk material is caused by subjecting part of the bulk material to a backward movement.

8. The method according to one of the preceding claims,
**characterised in that**
the oil-bearing seeds are dehulled as size graded bulk material, with the oil-bearing seeds preferably being sorted according to seed size from mm to mm.

9. The method according to one of the preceding claims,
**characterised in that**
the oil-bearing seeds are dried gently so that the residual moisture of their kernels is reduced to max. 10 % residual moisture or less, in the case of sunflower seeds, preferably to approx. 4 % residual moisture, with the drying temperature applied being at least approx. 10 °C below the boiling temperature of water.

10. A device for dehulling oil-bearing seeds, in particular sunflower seeds, comprising a container in form of a stationary drum (100) the inner wall of which is free of installations with stationary beater pins, wire mats and other beating or rubbing means of such kind and serving for holding a quantity of bulk material of oil-bearing seeds and agitating means (110, 120) arranged in the container being held in the bulk material, for agitating movement and rubbing of the oil-bearing seeds, under pressure build-up within the bulk material, against each other and against separated hull fragments held in the bulk material.

11. The device according to claim 10,
**characterised in that**
the inside surface of the drum (100) being free of installations has a smooth surface, and **in that** the agitating means comprises a shaft (110) extending in longitudinal direction of the drum axis, to which shaft edged agitator bars (120) are fixedly attached, preferably being rotatable about the longitudinal axis thereof.

12. The device according to claim 11,
**characterized in that** the agitator bars (120) are mounted such that the impact edge (S) points in the direction of the rotating movement of the agitator bars, wherein a pointer (Z) pointing from the longitudinal axis (M) of the bar to the impact edge (S) extends vertically with regard to the longitudinal axis of the shaft (110) or with an angle less than 90° thereto.

13. The apparatus according to claim 11 and 12,
**characterized in that** the agitator bars (120) extend from the drum axis to the interior wall of the drum with little clearance and are preferably of rectangular cross section.

14. The device according to claim 11 and 13,
**characterised in that**
the agitator bars (120) are spaced apart along the shaft (110) and are arranged angularly offset against each other at the shaft such that the bar axes follow a helical line, wherein, for avoiding imbalances, preferably only complete screw threads are provided on the shaft (110).

15. The device according to one of claims 11 to 14 ,
**characterized in that** all agitator bars (120) are mounted with an equal torsion about their longitudinal axis.

16. The device according to one of claims 11 to 15,
**characterised in that**
the drum has controllable inlet and/or outlet cross-sections, preferably with a synchronous control between drum inlet and drum outlet for the bulk material.

17. The device according to one of claims 11 to 15,
**characterised in that**
the drum is shaped conically tapered towards the outlet.

18. The device according to one of claims 10 to 17,
**characterised in that**
the device is combined with an upstream drying device in which the oil-bearing seeds can be dried to such an extent prior to the dehulling process that their kernel, which has shrunk as a result of giving off humidity, separates from the hull and in particular in the case of sunflower seeds, a space forms between the kernel and the husk.

## Revendications

1. Procédé pour décortiquer des graines oléagineuses, notamment des graines de tournesol, avec lequel des graines oléagineuses de préférence séchées sont, par agitation et en établissant une pression à l'intérieur d'une masse de matières en vrac constituée de ces graines oléagineuses délimitée dans l'espace, pressées et frottées entre elles et contre les parties d'écorces détachées et maintenues dans la masse de matières en vrac, la masse de matières en vrac étant maintenue dans un tambour fixe dont la paroi intérieure est exempte d'équipements constitués de battoirs fixes, de tresses en fil et d'autres dispositifs de battement ou de frottement similaires.

2. Procédé selon la revendication 1, **caractérisée en ce que** des sections d'entrée et ou de sortie du tambour sont ajustées pour réaliser la montée en pression.

3. Procédé selon la revendication 1 ou 2, **caractérisé en ce qu'**à la masse de matières en vrac sont rajoutées en supplément des parties d'écorces déjà détachées et provenant d'un étage de séparation du procédé placé en aval.

4. Procédé selon l'une quelconque des revendications précédentes, **caractérisé en ce que** les graines oléagineuses sont séchées de telle façon avant l'opération de décortication que leur noyau rétréci par restitution de l'humidité se sépare de l'écorce de la graine et qu'il se forme, en particulier dans le cas de graines de tournesol, un interstice entre le noyau et l'écorce de la graine.

5. Procédé selon l'une quelconque des revendications précédentes, **caractérisé en ce que** la pression établie dans les matières en vrac est limitée à des valeurs maximales sous lesquelles la force de compression agissant sur les graines oléagineuses et une augmentation de température provoquée dans la masse de matières en vrac ne conduisent pas encore à une sortie d'huile et **en ce qu'**une surveillance et une commande de la pression ont lieu de préférence par une mesure de la température réalisée sur des produits décortiqués prélevés dans la masse de matières en vrac.

6. Procédé selon l'une quelconque des revendications précédentes, **caractérisé en ce que** l'établissement d'une pression est commandé par un volume d'évacuation des matières en vrac qui est réduit par rapport au volume d'approvisionnement des matières en vrac et par un ajustement du régime de rotation d'un moteur des dispositifs d'agitation, des régimes de rotation élevés, avec lesquels les vitesses maximales au niveau des dispositifs d'agitation sont supérieures à 15 m/s, étant de préférence utilisés.

7. Procédé selon l'une quelconque des revendications précédentes, **caractérisé en ce que** le mouvement d'agitation a lieu comme mouvement simultané de transport depuis l'endroit d'approvisionnement des matières en vrac jusqu'à l'endroit d'évacuation des matières en vrac et **en ce qu'**avec l'augmentation de la dureté des graines oléagineuses, une mise en tourbillon supplémentaire de la masse de matières en vrac a lieu par le fait que des parties de matières en vrac sont soumises à un mouvement dans le sens du retour.

8. Procédé selon l'une quelconque des revendications précédentes, **caractérisé en ce que** les graines oléagineuses sont décortiquées en tant que produits approvisionnés selon la taille des graines, les graines oléagineuses étant de préférence classées par tailles de graines étagées de millimètre en millimètre.

9. Procédé selon l'une quelconque des revendications précédentes, **caractérisé en ce que** les graines oléagineuses sont séchées avec suffisamment de ménagement pour que l'humidité résiduelle de leurs noyaux soit réduite à un maximum de 10% d'humidité résiduelle ou moins, dans le cas de graines de tournesols de préférence à environ 4% d'humidité résiduelle, la température de séchage utilisée se situant au moins environ 10°C en-dessous de la température d'ébullition de l'eau.

10. Dispositif pour décortiquer des graines oléagineuses, notamment des graines de tournesol, comprenant un conteneur sous la forme d'un tambour fixe (100) dont la paroi intérieure est exempte d'équipements constitués de battoirs fixes, de tresses en fil et autres dispositifs de battement ou de frottements similaires et qui sert à recevoir une masse de matières en vrac se composant de graines oléagineuses, et un dispositif d'agitation (110, 120) placé dans le conteneur et maintenu dans la masse de matières en vrac qui sert, tout en établissant une pression à l'intérieur de la masse de matières en vrac, à la mise en mouvement d'agitation des graines oléagineuses et à leur frottement réciproque et contre les parties d'écorces détachées et maintenues dans la masse de matières en vrac.

11. Dispositif selon la revendication 10, **caractérisé en ce que** le côté intérieur non équipé du tambour (100) possède une surface lisse et **en ce que** le dispositif d'agitation comprend un arbre (110) qui s'étend dans le sens longitudinal de l'axe du tambour et sur lequel des barres d'agitation polygonales (120) sont disposées de manière fixe avec de préférence une possibilité de rotation autour de leurs axes longitudinaux.

12. Dispositif selon la revendication 11, **caractérisé en ce que** les barres d'agitation (120) sont placées de telle façon que l'arête d'impact (S) soit orientée dans le sens du mouvement de rotation des barres d'agitation, alors qu'un indicateur (Z) disposé entre l'axe longitudinal (M) de la barre et l'arête d'impact (S) s'étend perpendiculairement à l'axe longitudinal de l'arbre (110) ou en formant un angle inférieur à 90° avec celui-ci.

13. Dispositif selon l'une quelconque des revendications 11 et 12, **caractérisé en ce que** les barres d'agitation (120) s'étendent avec un faible jeu depuis l'axe du tambour jusqu'à la paroi intérieure du tambour et ont de préférence une section carrée.

14. Dispositif selon l'une quelconque des revendications 11 et 13, **caractérisé en ce que** les barres d'agitation (120) sont disposées avec un espacement le long de l'arbre (110) et sur l'arbre avec un écart angulaire réciproque tel que les axes des barres suivent une ligne en hélice, alors que, pour éviter des balourds, de préférence seuls des pas d'hélice entiers sont prévus sur l'arbre (110).

15. Dispositif selon l'une quelconque des revendications 11 à 14, **caractérisé en ce que** toutes les barres d'agitation (120) sont disposées avec la même position de rotation autour de leurs axes longitudinaux.

16. Dispositif selon l'une quelconque des revendications 11 à 15, **caractérisé en ce que** le tambour comprend des sections d'entrée et/ou des sections de sortie pouvant être commandées, de préférence au moyen d'une commande synchrone entre l'entrée et la sortie des matières en vrac du tambour.

17. Dispositif selon l'une quelconque des revendications 11 à 15, **caractérisé en ce qu'**en direction de la sortie, le tambour est configuré avec un rétrécissement conique.

18. Dispositif selon l'une quelconque des revendications 10 à 17, **caractérisé en ce qu'**il est combiné avec une unité de séchage placée en amont, dans laquelle les graines oléagineuses peuvent être séchées avant l'opération de décortication de telle façon que leur noyau rétréci par la restitution de l'humidité se sépare de l'écorce de la graine et qu'il se forme, en particulier dans le cas de graines de tournesol, un interstice entre le noyau et l'écorce de la graine.
